# EUROPEAN PATENT APPLICATION

(11) **EP 4 546 551 A1**
(43) Date of publication of application: **30.04.2025**
(21) Application number: 23205545.9
(22) Date of filing: 24.10.2023
(51) Int. Cl.: H01M 50/552, H01M 50/503, H01M 50/213, H01M 50/249, H01M 50/505, H01M 50/516, H01M 50/562, H01M 50/567

(54) **THERMAL CONDUCTION EFFICIENT TERMINAL DESIGN**

(71) Applicant: Bayerische Motoren Werke Aktiengesellschaft, 80809 München (DE)
(72) Inventor: Roh, Hyunchul, 81927 München (DE); Zensen, Nina, 85276 Pfaffenhofen an der Ilm (DE)

(57) **Abstract**

A Battery cell terminal (1) comprising at least one three-dimensional shape (3) that is configured to be connected to a busbar (2) or to a complementarily shaped shape of a busbar (2).

## Description

### FIELD OF THE INVENTION

The present invention relates to the field of traction batteries, in particular battery terminals. Specifically, the invention is directed to a battery terminal and a bus bar terminal for batteries, in particular traction batteries for electric vehicles.

### BACKGROUND

In traction batteries, the individual cells are connected to the busbar based on the pack and module concept. Increased cell capacity as well as the charging rate (C-rate) have an influence on the cell's temperature during charging. The faster a cell is charged, the higher the temperature can increase, which may pose a safety risk for the cell and ultimately the vehicle.

The term "electric vehicle" is used herein to refer to an electrically driven vehicle, in particular a purely electrically driven vehicle or a hybrid vehicle. Such vehicles are equipped with an electrical energy store in the form of a battery, for example a traction battery or drive battery, which stores and makes available the electrical energy required for driving. The batteries are also referred to as accumulators. These are usually electrochemical accumulators, in particular lithium-ion accumulators.

Such batteries are usually not constructed as a monoblock but as a modular system comprising a large number of battery cells that are electrically connected to one another. For the construction of a battery system in an electric vehicle, it is accordingly known to arrange battery cells in battery modules and to assemble these to form a battery. This increases the configurability of battery systems and enables the use of comparatively inexpensive standard battery cells. Such battery systems can also comprise a housing accommodating the battery modules, electrical circuits, and a battery management system.

For the purposes of the present disclosure, the term "battery cell" or "cell" is understood to mean an electrochemical storage cell, preferably a secondary cell. The term "cell" can be understood in terms of the physical appearance of the component as the smallest unit that can be contacted. In contrast, a battery module is understood to mean a structural unit which combines a plurality of battery cells. Accordingly, a battery or battery system is understood to be a structural unit which is constructed from one or more interconnected battery modules. The battery or battery system is preferably intended for use in an electric vehicle but can also be used in other vehicles or other areas of application.

The performance and removable capacity of a battery, in particular a lithium-ion battery, are temperature-dependent and can accordingly only be operated optimally in a certain temperature range, for example in a temperature range between 20 °C and 60 °C. If battery cells exhibit a temperature outside the optimum temperature range, this can lead to a decline in performance and even damage to the battery cells. This may also occur during charging, in particular if a charging speed exceeds a predetermined limit.

Accordingly, known battery systems are equipped with a temperature control system that is set up to cool the battery cells at temperatures above the optimal temperature range and to heat them at temperatures below the optimal temperature range.

### SUMMARY OF THE INVENTION

It is an object of the present invention to improve a battery cell and/or battery module, in particular a battery (cell) that is capable of high C-rates. Specifically, it is an object of the invention to provide a battery cell with a thermal conduction efficient design.

A solution to this problem is provided by the teaching of the independent claims. Various preferred embodiments of the present invention are provided by the teachings of the dependent claims.

According to an embodiment of the invention, a battery cell terminal, in particular for a battery cell, further in particular a cylindrical battery cell, is provided. According to an embodiment, the battery cell terminal comprises a three-dimensional shape, in particular on a surface of the battery cell terminal, further in particular on a surface facing in an axial direction, in particular an axial direction of the battery cell that may comprise the battery cell terminal. According to an embodiment, the battery cell terminal comprises at least one three-dimensional shape, in particular on the surface (as described herein). According to an embodiment, the three-dimensional shape is configured to be connected to and/or co-operate with a busbar, further in particular a three-dimensional shape, further in particular on a surface, of a busbar, in particular a busbar configured to (electrically) interconnect at least two battery cells (each) comprising a battery cell terminal as described herein. According to an embodiment, the battery cell terminal is configured to be connected to a busbar, in particular a connection area/terminal of the busbar, that comprises a complementary (three-dimensional) shape and or a, at least substantially, matching shape or a shape that matches in a section or in one or more sections. According to an embodiment, the three-dimensional shape is configured to increase a surface area and/or contacting area of the battery cell terminal. Furthermore, in an embodiment, the three-dimensional shape is configured to increase the surface area and/or contacting area of the battery cell terminal beyond the typically used terminals or typically used terminal rivets. According to an embodiment, the battery cell terminal is adapted to be inserted or (electrically and/or mechanically) connected to a cylindrical battery cell. According to an embodiment, the battery cell terminal is at least one of arranged on, electrically connected with, or integrally formed with a terminal rivet.

Advantageously, in an embodiment, this may allow for an increased structural stability and/or an increased structural strength, in particular when the battery cell terminal is connected to the bus bar and/or fused with the bus bar, i.e., by welding or the like. Further advantageously, this may, in an embodiment, allow for a (more) efficient use of space in a battery module. In an embodiment, the battery cell terminal as described herein may allow for an easy/easier connection and/or a simple/simplified assembly of a battery cell terminal as described herein and a busbar. Furthermore, in an embodiment, the battery cell terminal as described herein may allow for an increased surface area of contact between the battery cell terminal and the busbar, which may (further) allow for an improved thermal conductivity, which may allow for e.g. an increased thermal conduction efficiency that may allow for higher charging rates and/or a decrease in cell degradation during charging.

The term "three-dimensional shape" as used herein, may refer, in an embodiment, to a macroscopic shape, in particular not to a microscopic shape. The term "complementary" may, in embodiments, alternatively or additionally, refer to "matching at least in one section" or "matching in one or more sections" to the three-dimensional shape or the surface that comprises the three-dimensional shape(s).

According to an embodiment, the three-dimensional shape comprises at least one of an angle, a shape, an area or a depth that is configured to increase the surface area of the battery cell terminal, in particular in a direction of a battery cell and/or in a direction perpendicular to an axial direction of the battery cell. According to an embodiment, the three-dimensional shape comprises at least one geometrical form or is a combination of at least two geometrical shapes or more, in particular to increase a surface area that is adapted to be connected to a busbar or a complementary area of a busbar.

Advantageously, in an embodiment, this may allow for an improved electrical and/or thermal conductivity between the busbar and the battery cell terminal, which may allow higher C-rates. Furthermore, in an embodiment, this may allow for an increased driving range of a vehicle comprising at least one battery cell terminal as described herein, as, in an embodiment, battery cells with a higher cell energy may be used, in particular without exceeding a predetermined and/or in particular save temperature for the battery cell while/during charging.

According to an embodiment, the battery cell terminal may comprise a regular, in particular repeating pattern, of the three-dimensional shape(s), in particular at least in one direction and/or at least in one plane; or in exactly one direction or exactly one plane. According to an embodiment, the battery cell terminal may comprise an irregular pattern of three-dimensional shape(s), in particular at least in one direction and/or at least in one plane; or in exactly one direction or exactly one plane.

According to an embodiment, the shape of the terminal may be self-aligning, in particular the cell and/or the busbar may be configured to align the terminal of the cell with the provided shape and/or counter-shape (of the busbar).

Advantageously, in an embodiment, this may allow for an improved connection when a busbar is connected to the battery cell terminal, in particular an increased contact surface.

According to an embodiment, the three-dimensional shape comprises a contact angle of 45° or more and/or a contact angle of 160° or less. In an embodiment, the three-dimensional shape comprises at least one contact angle of 45° or more, or 60° or more, and/or a contact angle of 160° or less, or 140° or less, or 120° or less. In an embodiment, the term "contact angle" may refer to an angle of a surface (or at least one surface) that is adapted to contact a busbar or a complementary contact area of a busbar.

The term "contact angle" in the sense of the present invention refers to an angle between a plane that is perpendicular to an axis of the battery cell, in particular a plane that is perpendicular to an axial direction of the battery cell, in particular when the battery cell is a cylindrical battery cell. In an embodiment, the battery cell may be a pouch battery comprising a terminal as described herein, wherein the "contact angle" refers to an angle between the, typically, flat surface of the terminal and the three-dimensional shape (as described herein).

Advantageously, in an embodiment, the contact angle may allow for an increased contact area in a (complementary) connection with a busbar. In an embodiment, the contact angle may allow for a simple(r) positioning of either the battery cell terminal or the busbar, in particular when the busbar comprises a complementary contact surface or area.

According to an embodiment, the three-dimensional shape comprises a depth of 0.2 mm or more and/or a depth of 2.0 mm or less, wherein the term "depth" may refer to an overall depth in one spatial direction, in particular in an axial direction, and/or may refer to a depth with respect to a highest point of the battery cell terminal, in particular a (highest) part of the three-dimensional shape that extends (the farthest) in an axial direction, and/or with respect to a virtual plane (perpendicular to an axial direction of the battery cell) that is predetermined with respect to the battery cell or another feature of the battery cell terminal or the terminal rivet.

Advantageously, in an embodiment, this may allow for a more efficient (electrical and/or thermal) connection with a busbar.

According to an embodiment, the three-dimensional shape comprises at least one of a cone, a rhombus cone, a cube, a rhombus cube, a cylindrical shape, or the like. In an embodiment, the three-dimensional shape may comprise a combination of at least two of a cone, a rhombus cone, a cube, a rhombus cube, a cylindrical shape, or the like. In an embodiment, the three-dimensional shape may comprise at least one geometrical shape or a combination of at least two geometrical shapes. According to an embodiment, a busbar may comprise a complementary three-dimensional shape, in particular a three-dimensional shape that is adapted to fit, at least substantially, the three-dimensional shape of the battery cell terminal.

Advantageously, in an embodiment, this may allow for a more efficient (electrical and/or thermal) connection with a busbar, in particular a simple(r) assembly of a (in particular complementary) busbar.

According to an embodiment, the three-dimensional shape and/or the battery cell terminal comprises at least one of aluminum and/or aluminum composite.

Advantageously, in an embodiment, this may allow for an improved thermal conduction efficiency and/or an improved electrical conduction efficiency.

According to an embodiment, the battery cell terminal is configured to be connected, in particular electrically and/or mechanically. In an embodiment, the battery cell terminal is configured to be welded to a busbar or to a complementary three-dimensional shape of a busbar. According to an embodiment, the battery cell terminal and the busbar are welded, in particular via laser welding and/or ultrasonic welding, or the like.

According to an embodiment, the shape of the terminal and/or the shape of the counter terminal, in particular the shape of the terminal on the busbar, may be 3D-printed. According to an embodiment, a terminal rivet comprising a battery cell terminal as described herein, may be 3D-printed. According to an embodiment, the battery cell terminal, in particular a terminal rivet comprising the battery cell terminal as described herein may be produced through forming, primary forming and/or mechanical processing (machining).

According to an embodiment, at least one of the cell terminals and the busbar comprise a material that is configured to adapt, at least substantially, to the, in particular three-dimensional, shape of the cell terminal and the busbar, respectively. According to an embodiment, the busbar comprises a material that is configured to adapt to a/the, in particular three-dimensional, shape of the cell terminal and/or the cell terminal comprises a material that is configured to adapt to a/the, in particular three-dimensional, shape of the busbar, in particular through forming.

According to an embodiment, the cell terminal and/or the busbar terminal comprises a material that is configured to adapt its shape to the shape of its counterpart, when the two parts are connected and/or when the two parts reach a predetermined temperature, i.e. the cell terminal may adapt its shape, according to an embodiment, when the cell terminal is connected to the busbar and/or the cell terminal may adapt its shape, according to an embodiment, when the cell terminal and the busbar are connected and reach a (predetermined) temperature, in particular when the battery cell is charged or when the battery cell is charged for its first time (when connected to the busbar). In an embodiment, the busbar may, alternatively or additionally, be configured in an analogous way. According to an embodiment, the battery cell terminal and the busbar and/or the connecting area of the busbar comprise a different material, in particular a material that differs from the material of its counterpart in its hardness, in particular such that a three-dimensional shape of the one and/or the other (battery cell terminal and busbar) may be formed through pressing the battery cell terminal and the busbar together, in particular in an, at least substantially, axial direction of the battery cell comprising the battery cell terminal.

Advantageously, in an embodiment, this may allow for an improved thermal conduction efficiency.

According to an embodiment, a busbar is provided. The busbar may comprise a contact area for contacting and/or connecting with a battery cell terminal. According to an embodiment, the busbar may comprise a three-dimensional shape analogous to embodiments as described for the battery cell terminal, in particular a complementary three-dimensional shape, in particular on a surface configured to be connected to battery terminal(s). According to an embodiment, the three-dimensional shape, in particular on the surface of the busbar, is configured to co-operate with the three-dimensional shape of the battery cell terminal, and in particular, in an embodiment, vice versa.

According to an embodiment, a battery module is provided. In an embodiment, the battery module comprises at least two battery cells, each comprising a battery cell terminal, and a busbar electrically connecting the battery cell terminals.

According to an embodiment, a vehicle is provided. In an embodiment, the vehicle comprises at least one battery module as described herein.

According to an embodiment a method for connecting a battery cell terminal and a busbar is provided. According to an embodiment, a busbar is placed/arranged, in particular with its (one of its) connecting areas, which may, according to an embodiment, comprise a (complementary) three-dimensional shape as described herein, on a battery cell terminal comprising a three-dimensional shape, as described herein. According to an embodiment, the method may further comprise centering the battery cell terminal (and, in an embodiment, the battery cell comprising the battery cell terminal) to a predetermined location of the busbar that may comprise a/the (complementary) three-dimensional shape. According to an embodiment, the method may further comprise connecting the busbar and the battery cell terminal mechanically (friction lock) and/or, in particular subsequently, materially (material connection). In an embodiment, materially connecting may comprise welding, in particular laser welding and/or ultrasonic welding. According to an embodiment, at least parts of the method or some steps of the method may be repeated, in particular until a required or predetermined number of battery cell terminals are connected to the busbar.

In an embodiment, a connection system for connecting the battery cell terminal and the busbar as (respectively) described herein may be provided. The system may comprise means for placing/arranging a busbar on a battery cell terminal. The system may comprise, in an embodiment, means for centering the battery cell terminal(s) with connecting areas of the busbar, such as e.g. a camera system or sensor(s) or the like. According to an embodiment, the system may further comprise means for connecting the battery cell terminal and the busbar mechanically and/or materially.

Unless the context requires otherwise, where the term "comprising" or "including" or a variation thereof, such as "comprises" or "comprise" or "include", is used in the present description and claims, it does not exclude other elements or steps and are to be construed in an open, inclusive sense, that is, as "including but not limited to".

Where an indefinite or definite article is used when referring to a singular noun e.g. "a" or "an", "the", this includes a plural of that noun unless something else is specifically stated.

Appearances of the phrases "in some embodiments", "in one embodiment", "according to an embodiment" or "in an embodiment", if any, in the description are not necessarily all referring to the same embodiment. Furthermore, the particular features, structures, or characteristics may be combined in any suitable manner in one or more (further) embodiments.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Embodiments as described herein, can be arbitrarily combined with each other or with other embodiments/aspects of the present invention, unless such combination is explicitly excluded or technically impossible.

Finally, an aspect of the present invention is directed to a computer program or a computer program product, comprising instructions, which when executed on one or more processors of a connection system as described herein cause the system to perform the method as described herein.

The computer program (product) may in particular be implemented in the form of a data carrier on which one or more programs for performing the method are stored. Preferably, this is a data carrier, such as a CD, a DVD, or a flash memory module. This may be advantageous, if the computer program product is meant to be traded as an individual product independent from the processor platform on which the one or more programs are to be executed. In another implementation, the computer program product is provided as a file on a data processing unit, in particular on a server, and can be downloaded via a data connection, e.g., the Internet or a dedicated data connection, such as a proprietary or local area network.

The system may accordingly have a program memory in which the computer program is stored. Alternatively, the system may also be set up to access a computer program available externally, for example on one or more servers or other data processing units, via a communication link, in particular to exchange with it data used during the course of the execution of the computer program or representing outputs of the computer program.

Devices may also be implemented in software for execution by various types of processors. An identified device of executable code may, for instance, comprise one or more physical or logical blocks of computer instructions which may, for instance, be organized as an object, procedure, or function. Nevertheless, the executables of an identified device need not be physically located together but may comprise disparate instructions stored in different locations which, when joined logically together, comprise the device and achieve the stated purpose for the device. Indeed, a device of executable code could be a single instruction, or many instructions, and may even be distributed over several different code segments, among different programs, and across several memory means. Similarly, operational data may be identified and illustrated herein within devices and may be embodied in any suitable form and organized within any suitable type of data structure. The operational data may be collected as a single data set or may be distributed over different locations including over different storage means, and may exist, at least partially, merely as electronic signals on a system or network. Reference throughout this specification to "one arrangement" or "an arrangement" means that a particular feature, structure, or characteristic described in connection with the arrangement is included in at least one arrangement of the present invention. Thus, appearances of the phrases "in one arrangement" or "in an arrangement" in various places throughout this specification are not necessarily all referring to the same arrangement.

Furthermore, the described features, structures, or characteristics (of the battery cell terminal and/or the busbar) may be combined in any suitable manner in one or more arrangements. In the following description, numerous specific details are provided, such as examples of programming, software devices, user selections, network transactions, database queries, database structures, hardware devices, hardware circuits, hardware chips, etc., to provide a thorough understanding of arrangements of the invention. One skilled in the relevant art will recognize, however, that the invention can be practiced without one or more of the specific details, or with other methods, components, materials, etc. In other instances, well-known structures, materials, or operations are not shown or described in detail to avoid obscuring embodiments/aspects of the invention.

### BRIEF DESCRIPTION OF THE DRAWINGS

Further advantages, features and applications of the present invention are provided in the following detailed description and the appended figures, wherein:
**Fig. 1** schematically illustrates a battery cell terminal of the state of the art;
**Fig. 2a and 2b** schematically illustrate an embodiment of battery cell terminals before and after connection with a busbar; and
**Fig. 3** schematically illustrates an embodiment of a three-dimensional shape.

In the figures, identical reference signs are used for the same or mutually corresponding elements of the battery cell terminal, the busbar and/or the system as described herein.

### DETAILED DESCRIPTION OF EMBODIMENTS

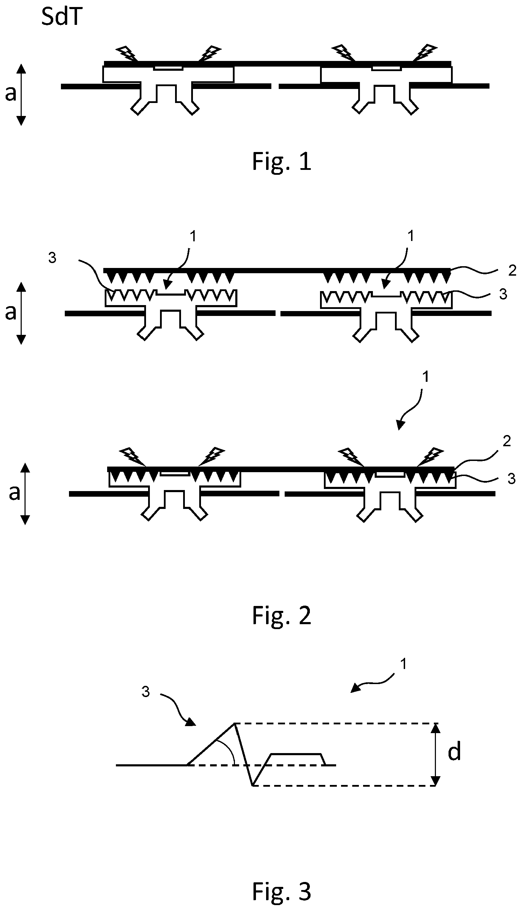

**Fig. 1** shows a battery cell terminal 1 according to the state of the art. The battery cell terminal 1 is comprised in a terminal rivet that is connected to a busbar 2.

**Fig. 2a** shows battery cell terminals 1 according to an embodiment before being arranged/connected to a busbar 2. Two battery cells are exemplarily shown that each comprise a battery cell terminal 1. The respective battery cell terminals 1 comprise (each) a three-dimensional shape 3. Furthermore, a busbar 2 is shown comprising complementary three-dimensional shapes 3. The battery cell terminals 1 are arranged such that the corresponding battery cells may be connected to the respective busbar 2 areas via the three-dimensional shapes 3. The battery cell terminal 1 comprises a regular pattern of three-dimensional shape 3(s) that are configured to be arranged/connected with complementary three-dimensional shape 3(s) of the busbar 2, such that, according to an embodiment, the battery cell terminals 1 are centered with the three-dimensional shape 3(s) of the busbar 2. Furthermore, an axial direction a of the battery cells that each comprise one of the two exemplarily shown battery cell terminals 1, is shown. According to an embodiment, the three-dimensional shape 3 may comprise different geometrical shapes. The three-dimensional shape 3 may, according to an embodiment, be restricted to a partial area of the battery cell terminal 1 or may be comprised on, at least substantially, the entire area of the battery cell terminal 1.

**Fig. 2b** shows battery cell terminals 1 according to an embodiment after being arranged/connected to a busbar 2 with complementary three-dimensional shapes 3. According to an embodiment, the three-dimensional shapes 3 of the busbar 2 and the battery cell terminals 1 are materially connected with each other, e.g., through welding, such as laser welding and/or ultrasonic welding or the like. The connection also electrically connects the battery cell terminals 1 and the battery cells respectively with the busbar 2, such that the battery cells may be charged or may be used to power an electrical application.

**Fig. 3** shows an embodiment of a three-dimensional shape 3 of a battery cell terminal 1 that comprises an (contact) angle. Furthermore, the three-dimensional shape 3 is shown with an overall depth d. Furthermore, the schematical cross section of the three-dimensional shape 3 shows a(n irregular) cone and a rhombus prism, however, according to embodiments the three-dimensional shape 3 may comprise further or other geometrical shapes. Furthermore, a raised area is shown as being comprised by the three-dimensional shape 3.

While above at least one exemplary embodiment of the present invention has been described, it has to be noted that a great number of variations thereto exists. Furthermore, it is appreciated that the described exemplary embodiments only illustrate non-limiting examples of how the present invention can be implemented and that it is not intended to limit the scope, the application or the configuration of the herein-described battery cell terminal(s)/busbar(s) and method. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 1: battery cell terminal
- 2: busbar
- 3: three-dimensional shape(s)
- a: axial direction
- d: depth of the three-dimensional shape
- SdT: state of the art

## Claims

1. Battery cell terminal (1) comprising at least one three-dimensional shape (3) on a surface that is configured to be connected to a busbar (2) or to a complementarily shaped three-dimensional shape of a busbar (2).

2. The battery cell terminal (1) according to the previous claim, wherein the three-dimensional shape (3) comprises at least one of an angle, shape, area or depth (d) that is configured to increase the surface area of the battery cell terminal (1), in particular in an axial direction (a) of a battery cell and/or in a direction perpendicular to an axial direction (a) of the battery cell.

3. The battery cell terminal (1) according to any one of the previous claims, wherein the three-dimensional shape (3) comprises a contact angle of 45° or more and/or a contact angle of 160° or less.

4. The battery cell terminal (1) according to any one of the previous claims, wherein the three-dimensional shape (3) comprises a depth (d) of 0.2 mm or more and/or a depth (d) of 2.0 mm or less.

5. The battery cell terminal (1) according to any one of the previous claims, wherein the three-dimensional shape (3) comprises at least one of a cone, a rhombus cone, a cube, a rhombus cube, a cylindrical shape.

6. The battery cell terminal (1) according to any one of the previous claims, wherein the three-dimensional shape (3) and/or the battery cell terminal (1) comprises at least one of aluminum and aluminum composite.

7. The battery cell terminal (1) according to any one of the previous claims, wherein the battery cell terminal (1) is configured to be connected to a busbar (2), in particular welded.

8. Busbar (2) comprising a three-dimensional shape (3) on a surface that is configured to be connected to a battery cell terminal (1) according to any of the previous claims 1 to 7.

9. Battery module comprising at least two battery cells each comprising a battery cell terminal (1) according to any of claims 1 to 7 and at least one busbar (2) according to claim 8 electrically connecting the battery cell terminals.

10. Vehicle comprising at least one battery module according to claim 9.

11. Method for assembling a battery module, in particular according to claim 9, comprising at least one battery cell with a battery cell terminal (1) according to any of claims 1 to 7 and/or a busbar (2) according to claim 8, comprising:
arranging a busbar (2) or a busbar (2), such that a contact area on the busbar (2) is arranged on the battery cell terminal (1); and
connecting the busbar (2) to the battery cell terminal (1), wherein the connecting comprises at least one of welding, laser welding and ultrasonic welding.
